# EUROPEAN PATENT APPLICATION

(11) **EP 4 568 310 A1**
(43) Date of publication of application: **11.06.2025**
(21) Application number: 22953613.1
(22) Date of filing: 04.08.2022
(51) Int. Cl.: H04W 8/26

(54) **MOBILE NODE CONFIGURATION METHOD, MOBILE NODE, AND HOST DEVICE**

(71) Applicant: FUJITSU LIMITED, Kawasaki-shi, Kanagawa 211-8588 (JP)
(72) Inventor: LU, Yang, Beijing 100022 (CN)
(74) Representative: Haseltine Lake Kempner LLP
(86) International application number: PCT/CN2022/110392
(87) International publication number: WO 2024/026804

(57) **Abstract**

Embodiments of the present application provide a mobile node configuration method, a mobile node, and a donor device. F1 connection of a distributed unit (DU) of the mobile node terminates at a first donor-CU; the first donor-CU configures or reconfigures second information related to a first cell for DU of the mobile node according to first information related to a position of the mobile node; and the first donor-CU transmits the configured or reconfigured second information related to the first cell to the DU of the mobile node.

## Description

### Technical Field

Embodiments of the present application relate to the field of communication.

### Background

In the future, a seamless cellular network deployment requires a very flexible and ultra-dense new radio (NR) cell deployment, an ultra-dense network is one of the goals of 5G, and deploying a NR network that does not require wired backhaul is very important to achieve the ultra-dense network for 5G. Because 5G millimeter wave reduces the coverage of the cell, a wireless self backhaul system requires multiple hops to meet a deployment requirement. The high bandwidth, large-scale multiple-input multiple-output (MIMO) and beaming system of 5G make it easier to develop a wireless self backhaul system of an ultra-dense NR cell in 5G than in LTE. In order to develop such a multi-hop system with wireless self backhaul, 3GPP began research and standardization of integrated access and backhaul (IAB) projects in Rel-16.

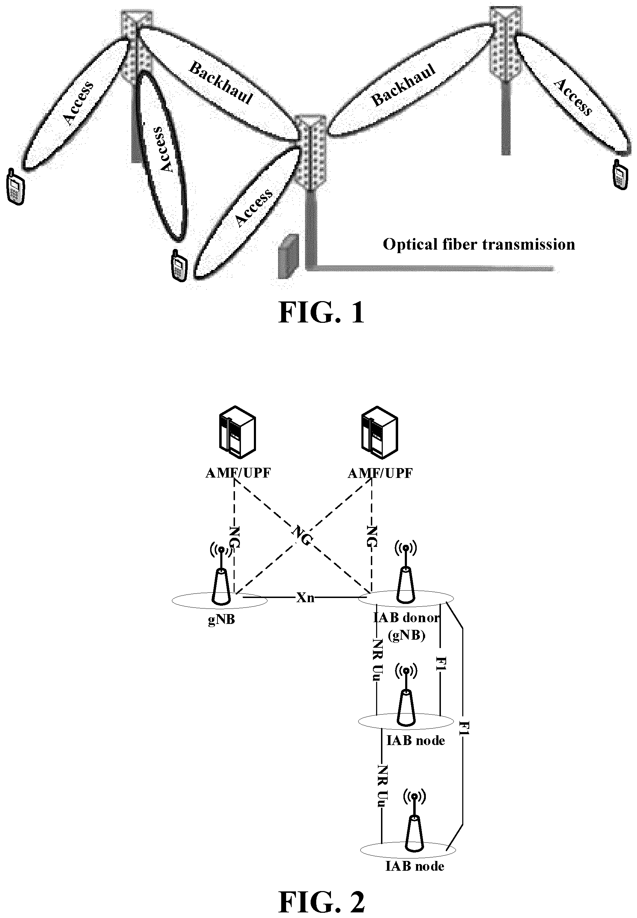

FIG. 1 is a schematic diagram of an IAB system. As shown in FIG. 1, in an IAB system, the access and backhaul are transmitted wirelessly by a Uu air interface of NR. A relay node supports both access and backhaul functions, and the relay node multiplexes an access link and a backhaul link in the time domain, frequency domain or spatial domain, and the access link and the backhaul link may use the same or different frequency bands.

In the IAB network architecture, a relay node refers to an IAB-node that supports both the access and backhaul functions. The last hop access node on a network side is called an IAB-donor, which supports gNB function and supports IAB-node access. All UE data may be transmitted back to the IAB-donor via the IAB-node in one or more hops.

The function of the IAB-node is divided into two parts, one is the gNB-DU function, called the IAB-DU (distributed unit), and the other is the UE function, called the IAB-MT (mobile termination). IAB-DU implements network side device functions, serves one or more cells and is connected to a child IAB-node downstream (a child IAB node or a child node for short), provides NR air interface access for the UE and the child IAB-Node downstream and establishes F1 connection with the IAB donor-CU (donor centralized unit). The IAB-MT implements some terminal device functions and is connected to a parent IAB-node upstream (a parent IAB node or a parent node for short) or an IAB donor-DU. The IAB-MT includes physical layer, layer 2, RRC (Radio Resource Control) and NAS (Non-Access Stratum) layer functions, and is also indirectly connected to the IAB Donor-CU and a core network (CN).

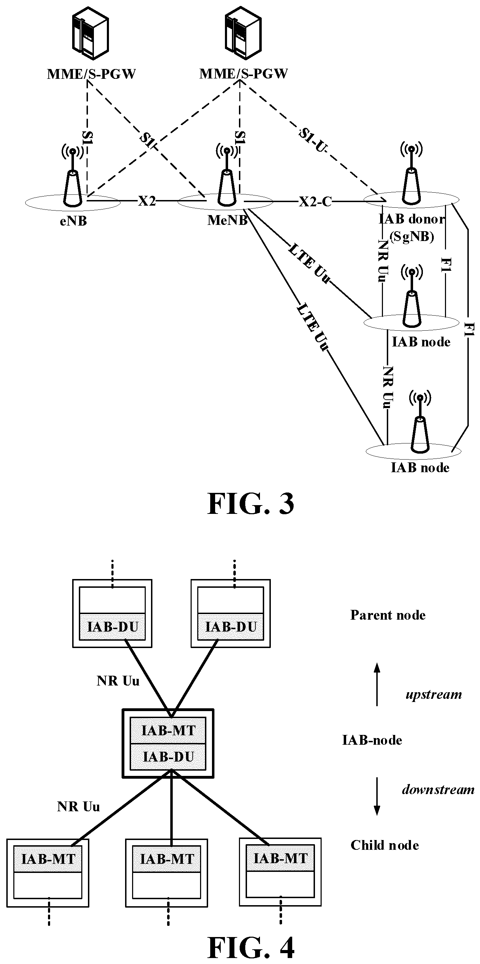

In the IAB system, the IAB-node may be connected to a network in either a standalone (SA) mode or an E-UTRA-NRDualConnectivity (EN-DC) mode. FIG. 2 is a schematic diagram of an IAB architecture in an SA mode. FIG. 3 is a schematic diagram of an IAB architecture in an EN-DC mode.

FIG. 4 is a diagram of an IAB node (IAB-node) with a parent IAB-node and a child IAB-node. As shown in FIG. 4, the IAB-DU of the IAB node is connected to the IAB-MT of the child node as the network side, and the IAB-MT of the IAB node is connected to the IAB-DU of the parent node as the terminal side.

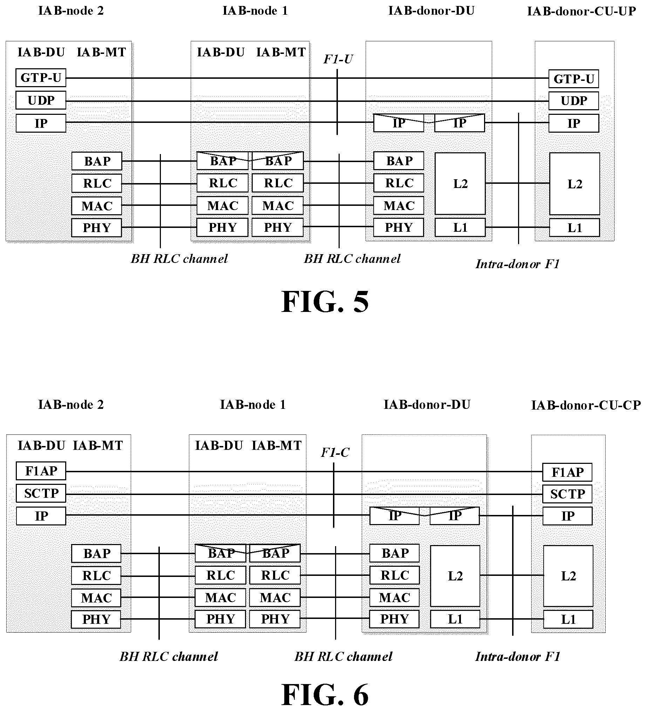

FIG. 5 is a schematic diagram of an F1 user plane (F1-U) protocol stack between an IAB-DU and an IAB donor-CU. FIG. 6 is a schematic diagram of an F1 control plane (F1-C) protocol stack between an IAB-DU and an IAB donor-CU. As shown in FIGs. 5 and 6, the F1-U and the F1-C are built above a transmission (IP) layer between the IAB-DU and the IAB donor-CU, with two-hop wireless backhaul and one-hop wired backhaul in FIGs. 5 and 6.

On the backhaul link, the transmission (IP) layer is carried on a backhaul adaptation protocol (BAP) sublayer. A BAP entity in the IAB-node implements the routing function of the IAB system, and a routing table is provided by the IAB donor-CU. A BAP PDU (protocol data unit) is transmitted in an RLC (radio link control) channel of the backhaul link. Multiple RLC channels of the backhaul link may be configured by the IAB-donor to carry traffic with different priorities and QoS (quality of service). The BAP entity maps the BAP PDU to different backhaul RLC channels.

It should be noted that, the above introduction to the background is merely for the convenience of clear and complete description of the technical solution of the present application, and for the convenience of understanding of persons skilled in the art. It cannot be regarded that the above technical solution is commonly known to persons skilled in the art just because that the solution has been set forth in the background of the present application.

### Summary

The inventor finds that the identifier of IAB nodes is currently related to their locations, but in mobile scenarios, the cell information of mobile nodes may conflict with adjacent cells, thus making the network unable to support a plurality of mobile nodes to work simultaneously.

In order to solve at least one of the above problems, embodiments of the present application provide a mobile node configuration method, a mobile node, and a donor device.

According to an aspect of embodiments of the present application, a mobile node configuration method is provided in which F1 connection of a distributed unit (DU) of the mobile node is terminated at a first donor-CU, the method including:
the first donor-CU configures or reconfigures second information related to a first cell for IAB-DU of the mobile node according to first information related to a position of the mobile node; and
the first donor-CU transmits the configured or reconfigured second information related to the first cell to the DU of the mobile node.

According to another aspect of the embodiments of the present application, a donor device is provided, wherein F1 connection of a distributed unit (DU) of a mobile node is terminated at the donor device, and the donor device includes:
a configuring portion configured to configure or reconfigure second information related to a first cell for the DU of the mobile node according to first information related to a position of the mobile node; and
a communicating portion configured to transmit the configured or reconfigured second information related to the first cell to the IAB-DU of the mobile node.

According to another aspect of embodiments of the present application, a mobile node configuration method is provided in which F1 connection of a distributed unit (DU) of the mobile node is terminated at a first donor-CU, the method including:
the DU of the mobile node receives second information related to a first cell transmitted by the first donor-CU, wherein the second information related to the first cell is configured or reconfigured by the first donor-CU according to the first information related to a position of the mobile node.

According to another aspect of embodiments of the present application, a mobile node is provided, which includes a mobile termination (MT) and a distributed unit (DU); F1 connection of the distributed unit (IAB-DU) is terminated at a first donor centralized unit (donor-CU), and the DU of the mobile node receives second information related to a first cell transmitted by the first donor-CU, wherein the second information related to the first cell is configured or reconfigured by the first donor-CU according to the first information related to a position of the mobile node.

According to another aspect of embodiments of the present application, an IAB system is provided, which includes a donor centralized unit and a mobile node; F1 connection of a distributed unit (DU) of the mobile node is terminated at the donor centralized unit, and the donor centralized unit configures or reconfigures second information related to a first cell for DU of the mobile node according to first information related to a position of the mobile node; and transmits the configured or reconfigured second information related to the first cell to the DU of the mobile node.

One of the beneficial effects of the embodiments of the present application includes: the first donor-CU configures or reconfigures the second information for the DU of the mobile node according to the first information of the mobile node; and transmits the second information to the DU of the mobile node, therefore, the first donor-CU may dynamically configure information in a mobile region for the mobile node according to real-time location information of the mobile node, which therefore may avoid conflict between the mobile node and adjacent cells, so that the network may support a plurality of mobile nodes to work simultaneously.

With reference to the specification and drawings below, specific embodiments of the present application are disclosed in detail, which specifies the manner in which the principle of the present application can be adopted. It should be understood that, the scope of the embodiments of the present application is not limited. Within the scope of the spirit and clause of the appended supplements, the embodiments of the present application include many variations, modifications and equivalents.

The features described and/or shown for one embodiment can be used in one or more other embodiments in the same or similar manner, can be combined with the features in other embodiments or replace the features in other embodiments.

It should be emphasized that, the term "include/comprise" refers to, when being used in the text, existence of features, parts, steps or assemblies, without exclusion of existence or attachment of one or more other features, parts, steps or assemblies.

### Brief Description of the Drawings

Elements and features described in one of the drawings or embodiments of the present application may be combined with the elements and features shown in one or more other drawings or embodiments. Moreover, in the drawings, similar reference signs indicate corresponding parts in several drawings and may be used to indicate corresponding parts used in more than one embodiment.

The included drawings are used for providing further understanding on the embodiments of the present application, constitute a portion of the Description, are used for illustrating the embodiments of the present application and explain the principle of the present application together with the literary description. Obviously, the drawings described below are merely some examples of the present application, persons ordinarily skilled in the art can also obtain other drawings according to these drawings without making creative efforts. In the drawings:
FIG. 1 is a schematic diagram of an IAB system;
FIG. 2 is a schematic diagram of an IAB architecture in an SA mode;
FIG. 3 is a schematic diagram of an IAB architecture in an EN-DC mode;
FIG. 4 is a schematic diagram of a parent IAB-node and a child IAB-node;
FIG. 5 is a schematic diagram of an F1-U protocol stack of the IAB system;
FIG. 6 is a schematic diagram of an F1-C protocol stack of the IAB system;
FIG. 7 is a schematic diagram of IAB system routing;
FIG. 8 is a schematic diagram of a mobility scenario;
FIG. 9 is another schematic diagram of a mobility scenario;
FIG. 10 is a schematic diagram of a mobile node configuration method in the embodiments of the present application;
FIG. 11 is a schematic diagram of a mobile node configuration method in the embodiments of the present application;
FIG. 12 is a schematic diagram of an IAB integration method in the embodiments of the present application;
FIG. 13 is a signaling flow chart of IAB integration in the embodiments of the present application;
FIG. 14 is a schematic diagram of a donor device in the embodiments of the present application;
FIG. 15 is a schematic diagram of a mobile node in the embodiments of the present application; and
FIG. 16 is a schematic diagram of an IAB device in the embodiments of the present application.

### Detailed Description

With reference to the drawings, the foregoing and other features of the present application will become apparent through the following specification. The specification and drawings specifically disclose the particular embodiments of the present application, showing part of the embodiments in which the principle of the present application can be adopted, it should be understood that the present application is not limited to the described embodiment, on the contrary, the present application includes all modifications, variations and equivalents that fall within the scope of the appended supplements.

In embodiments of the present application, the terms "first", "second", etc., are used to distinguish different elements by their appellation, but do not indicate the spatial arrangement or chronological order of these elements, etc., and these elements shall not be limited by the terms. The term "and/or" includes any and all combinations of one or more of the terms listed in association with the term. The terms "contain", "include", "have", etc., refer to the presence of the stated feature, element, component or assembly, but do not exclude the presence or addition of one or more other features, elements, components or assemblies.

In the embodiments of the present application, the singular forms "one", "the", etc., including the plural forms, shall be broadly understood as "a sort of" or "a kind of" and not limited to the meaning of "one"; furthermore, the term "said" shall be understood to include both the singular form and the plural form, unless it is expressly indicated otherwise in the context. In addition, the term "according to" should be understood to mean "at least partially according to ...", and the term "based on" should be understood to mean "based at least partially on ...", unless it is expressly indicated otherwise in the context.

In embodiments of the present application, the term "communications network" or "wireless communications network" may refer to a network that complies with any of the following communication standards, such as New Radio (NR), Long Term Evolution (LTE), Enhanced Long Term Evolution (LTE-A), Wideband Code Division Multiple Access (WCDMA), High-Speed Packet Access (HSPA), etc.

In addition, the communication between the devices in the communication system can be carried out according to the communication protocol of any stage, for example, including but not being limited to 1G (generation), 2G, 2.5G, 2.75G, 3G, 4G, 4.5G and future 5G, 6G, etc., and/or other communication protocols currently known or to be developed in the future.

In the embodiments of the present application, the term "network device" refers to, for example, a device in the communication system that connects a terminal equipment to the communication network and provides services to the terminal equipment. The network device may include but is not limited to: a base station (BS), an access point (AP), a transmission reception point (TRP), a broadcast transmitter, a mobile management entity (MME), a gateway, a server, a radio network controller (RNC), a base station controller (BSC), etc.

The base station may include, but is not limited to, a node B (NodeB or NB), an evolution node B (eNodeB or eNB), 5G base station (gNB), etc., and may also include a remote radio head (RRH), a remote radio unit (RRU), a relay, or a low-power node (such as femto, pico, etc.). And the term "base station" may include some or all of their functions, with each base station providing communication coverage to a specific geographic area. The term "cell" can refer to a base station and/or its coverage area, depending on the context in which the term is used.

In the embodiments of the present application, the term "user equipment" (UE) refers, for example, to a device that is connected to the communication network through the network device and receives network services, and may also be referred to as "Terminal Equipment" (TE). The terminal device can be fixed or movable, and can also be called a mobile station (MS), a terminal, a user, a subscriber station (SS), an access terminal (AT), a station, etc.

The terminal equipment may include but is not limited to: a cellular phone, a personal digital assistant (PDA), a wireless modems, a wireless communication device, a handheld device, a machine-type communication device, a laptop computer, a cordless phone, a smart phone, a smart watch, a digital camera, etc.

For another example, in scenarios such as Internet of Things (IoT), the terminal equipment may also be a machine or an apparatus that performs monitoring or measurement, and may include, but is not limited to, a machine type communication (MTC) terminal, a vehicle communication terminal, a device to device (D2D) terminal, a machine to machine (M2M) terminal, and etc.

The routing function of the IAB system is implemented by a BAP layer. Each IAB-node stores a BH routing configuration and a BH RLC channel mapping configuration. The BAP entity is routed according to the routing configuration, RLC channel mapping configuration, and the routing ID in the BAP layer data packet header. The routing ID contains a destination BAP address and a path ID.

The routing configuration includes a mapping relationship between the routing ID and a BAP address of the next-hop node. The RLC channel mapping configuration contains a mapping relationship between a BAP address of a prior-hop node, an RLC channel ID of an ingress link, and a BAP address of the next-hop node and an RLC channel ID of an egress link.

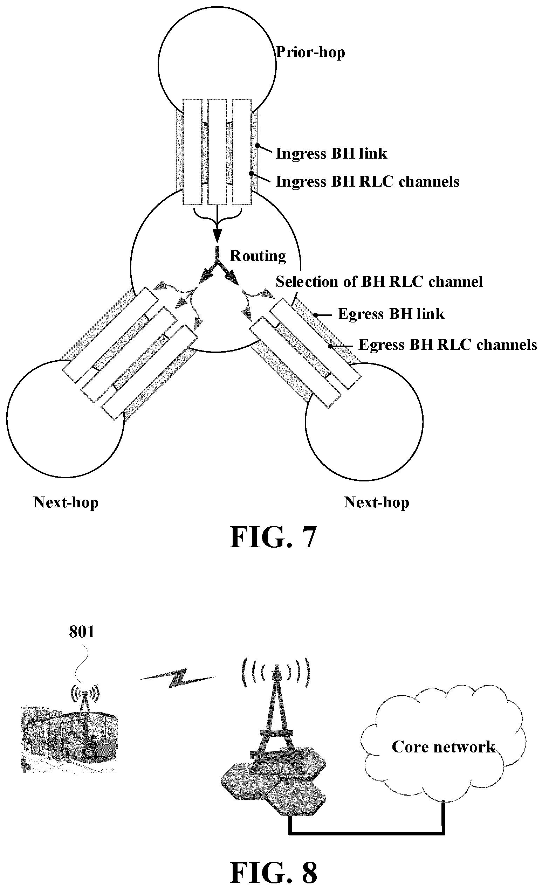

FIG. 7 is a schematic diagram of IAB system routing. As shown in FIG. 7, for each data packet, the BAP address of the next-hop node can be looked up from the routing configuration by the routing ID of the data packet header. The BAP address of the prior-hop node and the RLC channel ID of the ingress link are both known. In this way, after the BAP address of the next-hop node is determined, the RLC channel ID of the egress link may be looked up according to the BAP address of the prior-hop node + the RLC channel ID of the ingress link + the BAP address of the next-hop node by using the RLC channel mapping configuration.

The IAB-donor DU stores the BH routing configuration and Downlink Traffic to BH RLC Channel Mapping Configuration. The IAB-donor DU performs routing according to the routing configuration, RLC channel mapping configuration, and the routing ID in the BAP layer data packet header. The routing configuration includes a mapping relationship between the routing ID and an address of the next-hop node. The downlink traffic to BH RLC channel mapping configuration includes a mapping relationship between a target IP address, a differentiated services code point (DSCP), and the next-hop node address and the RLC channel ID of the egress link.

For each downlink data packet that reaches the IAB-donor DU, the IAB-donor DU can check the next-hop node address from the routing configuration based on the Routing ID in the data packet header. In this way, after the next-hop node address is determined, the RLC channel ID of the egress link is further looked up from the downlink traffic to BH RLC channel mapping configuration according to the IP address of the data packet and the DSCP.

An access IAB node stores uplink backhaul information (BH information), including the routing ID used by traffic, the uplink BH RLC channel ID, and the next-hop node address. The access IAB node configures the routing ID in the BAP layer data packet header of the uplink traffic according to the uplink BH information and selects the BH RLC channel and next-hop node for the uplink traffic transmission.

The routing of the IAB system and the BH RLC channel mapping are schematically illustrated hereinabove.

Rel-17 NR has studied the scenario when the IAB node is static, and has standardized the process of changing transmission paths by the fixed IAB-node between different donor-DUs under F1-terminating donor CU (or called topology adaptation), as well as the process of changing the transmission path between F1-terminating donor-CU and non-F1-terminating donor-CU. Rel-18 NR may perform research for the mobile scenario.

FIG. 8 is a schematic diagram of a mobility scenario. As shown in FIG. 8, for example, an IAB node 801 is mounted on a moving vehicle for serving a user equipment (UE) on the vehicle. Therefore, it is necessary to standardize the process of changing the transmission path when the mobile IAB node moves between multiple different donor-CUs.

For a static IAB node, the physical cell identifier (PCI) and physical random access channel (PRACH) resource configuration of its serving cell can be fixed, and because the network side may determine the neighboring cell (such as a macro cell or a serving cell of another IAB node) of its serving cell according to the fixed location, thereby performing control such that the PCI or PRACH resource of the serving cell does not conflict with the PCI or PRACH of the surrounding neighboring cells.

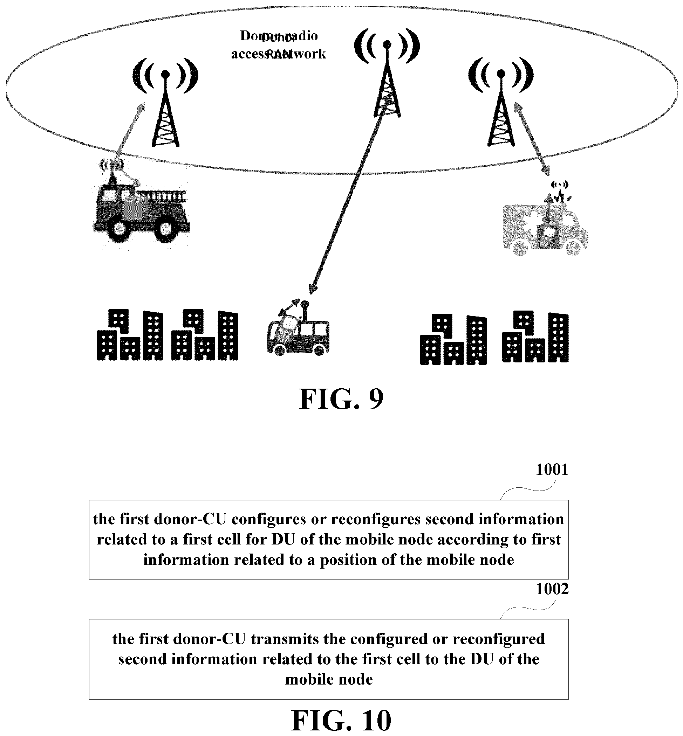

FIG. 9 is another schematic diagram of a mobility scenario. As shown in FIG. 9, due to mobility of the mobile IAB node, the movement trajectory of the mobile IAB node may involve control regions of multiple different donor-CUs. Fixing PCI and fixing PRACH resources are not feasible for the mobile IAB nodes, because if the PCI or PRACH resource of the mobile IAB node is fixed, the network side must ensure that the neighboring cells involved in the movement trajectory are not able to be configured with the same PCI or PRACH resource. In the case of more mobile IAB nodes, the resources available for other cells may be greatly reduced, so that the network side is not able to support a plurality of mobile nodes to work simultaneously. Therefore, the feasible solution is that the network side dynamically configures the PCI or PRACH resource of the serving cell of the IAB node according to the moving position of the IAB node, to avoid conflict with the resource of the neighboring cell at its location. However, there is currently no technical support for dynamic PCI or PRACH resource configuration of the IAB node.

On the other hand, the location of the UE in the access cell can be determined by the NR cell global Identifier (NCGI) and the tracking area (TA) of the serving cell. The core network usually locates the UE according to the NCGI and TA of the UE serving cell. Therefore, the NCGI and TA of the serving cell are configured by the network side according to the location of the cell.

For the static IAB node, the network side may statically configure the NCGI and TA of its serving cell according to its location. However, due to mobility of the mobile IAB node, the movement trajectory may involve multiple control regions of different donor-CUs, and the location of its serving cell changes in the network. The way of fixing the NCGI and TA is not feasible for the mobile IAB node, because the fixed NCGI and TA are not able to reflect the actual location of the serving cell of the mobile IAB node, and thus are not able to reflect the actual location of the UE of the access cell. As a result, the network side is not able to acquire the actual location of the UE of the access mobile IAB node. Therefore, the feasible solution is that the network side dynamically configures the NCGI and TA of the serving cell of the IAB node according to the moving position of the IAB node, to reflect the actual location of the UE of the access cell. However, there is currently no technical support for dynamic NCGI configuration and/or TA configuration.

In the embodiments of the present application, an IAB node device refers to a migrating node or its child node unless otherwise stated. In addition, PCI, NCGI and TA are taken as examples for illustration in the above, but the present application is not limited to this, for example, there may further be other information related to the mobile IAB node. The embodiments of the present application are not limited to the IAB node either, and for example, it is also applicable for Network-controlled repeater (NCR).

Hereinafter the embodiments of the present application are described further.

### Embodiments of the first aspect

The present application embodiments provide a mobile node configuration method in which F1 connection of DU of the mobile node is terminated at the first donor-CU, that is, the first donor-CU is an F1-terminating donor-CU of the mobile node.

FIG. 10 is a schematic diagram of a mobile node configuration method in the embodiments of the present application. As shown in FIG. 10, the method includes:
1001: the first donor-CU configures or reconfigures second information related to a first cell for DU of the mobile node according to first information related to a position of the mobile node; and
1002: the first donor-CU transmits the configured or reconfigured second information related to the first cell to the DU of the mobile node.

Therefore, the first donor-CU of the embodiments of the present application may dynamically configure second information related to the cell (such as cell ID) in a mobility region for the mobile node according to first information (such as real-time location information) related to a position of the mobile node, which therefore may avoid conflict between the mobile node and adjacent cells, so that the network may support a plurality of mobile nodes to work simultaneously.

It is worth noting that FIG. 10 above only schematically illustrates the embodiments of the present application, but the present application is not limited to this. For example, the order of execution between operations can be adjusted appropriately, and some other operations can be added or reduced. Those skilled in the art may make appropriate variations in accordance with the above contents, and which is not limited to the disclosure of FIG. 10 above.

In some embodiments, the first donor-CU is an F1-terminating donor-CU of a plurality of mobile nodes in a designated area, and when the plurality of nodes move in the designated area, F1 connections of IAB-DUs of the plurality of mobile nodes are always terminated at the first donor-CU.

For example, an operator designates a specific donor-CU as a centralized control donor-CU of the mobile IAB node within a designated area, and the F1 connection of an IAB node moving within the designated area is always terminated at the centralized control donor-CU. The IAB node may change the non-F1-terminating donor-CU according to its real-time location, and migrate the transmission path to a donor-DU under the latest non-F1-terminating donor-DU without changing the F1-terminating donor-CU.

In some embodiments, the first donor-CU transmits the configured or reconfigured second information related to the first cell to the DU of the mobile node via a first F1AP message.

For example, the first F1AP message includes an F1 setup response message or a gNB CU configuration update message.

In some embodiments, the second information includes at least one of the following: a physical cell identifier (PCI), an NR cell global identifier (NCGI), a tracking area code (TAC), or a physical random access channel (PRACH) resource configuration. The present application is not limited to this, and for example, it may include one or more of the above information, or it may include other information.

In some embodiments, before the first donor-CU configures or reconfigures the second information related to the first cell for the DU of the mobile node, the first donor-CU can also receive the currently configured second information of the first cell transmitted by the DU of the mobile node via a second F1AP message, or the first donor-CU also receives second information of a third cell transmitted by a second donor-CU, wherein the second donor-CU is a non-F1-terminating donor-CU of the mobile node.

For example, the second F1AP message includes an F1 setup request message or a gNB DU configuration update message. Through the mobile node reporting the currently configured second information, the first donor-CU may better know the configuration information of the current first cell of the mobile node, so that the second information related to the first cell may be more accurately configured or reconfigured.

For another example, the current non-F1-terminating donor-CU of the mobile IAB node may transmit the PCI, NCGI, TAC and PRACH configurations of the adjacent cell of the DU of the mobile IAB node (such as the cell detected by the mobile termination it serves) to the F1-terminating donor-CU, so that the centralized control donor-CU can configure PCI, NCGI, TAC and PRACH resources for the DU of the mobile node according to the PCI, NCGI, TAC and PRACH resources of the neighboring cell of the DU of the mobile IAB node, so as to avoid conflicts between the PCI or PRACH resource of the cell of the DU of the mobile node and the PCI or PRACH resource of the adjacent cell, or make TAC and NCGI of the cell of the DU of the mobile node be consistent with that of the adjacent cell.

In some embodiments, the first information related to the position of the mobile node includes: position information of the mobile node or information on a cell accessed by the mobile termination (MT), and/or, second information related to a second cell detected and reported by the mobile termination (MT) served by the first cell.

For example, the centralized controlled donor-CU may configure PCI, NCGI and TAC for the DU of the mobile IAB node according to the location information or network positioning information registered by the mobile IAB node in the core network or according to the serving cell accessed by the MT of the IAB node indicated by the current non-F 1-terminating donor-CU (i.e., the donor-CU accessed by the IAB-MT of the IAB node), and the configuration information may be transmitted to the mobile IAB node using an F1AP message.

For another example, the centralized controlled donor-CU can configure PCI, NCGI and TAC for the DU of the mobile IAB node according to the PCI, NCGI, TAC and PRACH resources of the neighboring cell of the DU of the mobile IAB node. In this way, the PCI and PRACH resources of the mobile IAB node do not conflict with the neighboring cell, and the NCGI and TAC of the mobile IAB node are changed according to its actual geographical location, and the network may acquire the actual location information of the UE of the access mobile IAB node.

In some embodiments, the non-F 1-terminating donor-CU of the mobile node changes from the second donor-CU to the third donor-CU; and the first donor-CU also receives the first information related to a position of the mobile node transmitted by the second donor-CU or the third donor-CU.

In some embodiments, a physical cell identifier (PCI) configured or reconfigured for the first cell does not conflict with the PCI of a neighboring cell, an NR cell global identifier (NCGI) configured or reconfigured for the first cell is associated with the NCGI of the neighboring cell, a tracking area code (TAC) configured or reconfigured for the first cell is identical to or associated with the TAC of the neighboring cell, and a physical random access channel (PRACH) resource configured or reconfigured for the first cell does not conflict with the PRACH resource of the neighboring cell.

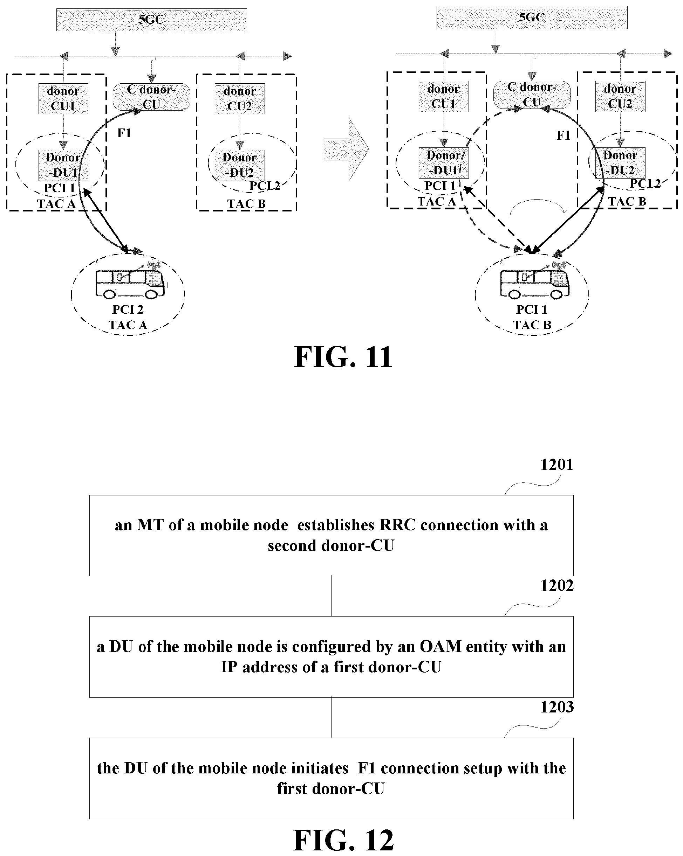

FIG. 11 is a schematic diagram of a mobile node configuration method in the embodiments of the present application. As shown in FIG. 11, C donor-CU acts as the centralized controlled CU within the mobile range of the IAB node on the vehicle, and F1 connection is established between the IAB node and the C donor-CU.

When a donor-CU1 serves as the non-F1-terminating donor-CU, the parent node of the IAB node is the donor-DU1, and the transmission path of F1 passes through the donor-DU1. In this case, according to the location of the IAB node (the serving cell of the parent node PCI = 1, TAC = A, NCGI = k), the C donor-CU configures PCI as 2, TAC as A, and NCGI as k+1 for the serving cell of the IAB node, and configures them to the IAB node via the F1AP message (GNB-CU CONFIGURATION UPDATE).

Therefore, the PCI of the serving cell of the parent node is 1, while the PCI of the serving cell of the IAB node is 2, and such difference between the two may make the PCI of the mobile IAB node does not conflict with the neighboring cell. For the serving cell of the parent node, TAC = A and NCGI = k; for the serving cell of the IAB node, TAC = A and NCGI = k+1, which are the same or related between the two, so that the network may acquire the actual location information of the UE of the access mobile IAB node.

When the IAB node moves to a donor-DU2, a donor-CU2 becomes a new non-F1-terminating CU, and the F1 transmission path migrates to the donor-DU2. In this case, according to the location of the IAB node (the serving cell of the parent node PCI = 2, TAC = B, NCGI = m), the C donor-CU configures PCI as 1, TAC as B, and NCGI as m + 1 for the serving cell of the IAB node, and configures them to the IAB node via the F1AP message (GNB-CU CONFIGURATION UPDATE).

Therefore, the PCI of the serving cell of the parent node is 2, while the PCI of the serving cell of the IAB node is 1, and such difference between the two may make the PCI of the mobile IAB node does not conflict with the neighboring cell. For the serving cell of the parent node, TAC = B and NCGI = m; for the serving cell of the IAB node, TAC = B and NCGI = m+1, which are the same or related between the two, so that the network may acquire the actual location information of the UE of the access mobile IAB node.

The embodiments above only schematically illustrate the embodiments of the present application, but the present application is not limited to this, and appropriate variations can also be made on the basis of the above embodiments. For example, the above embodiments may be used separately, or one or more of the above embodiments may be combined.

As can be seen from the above embodiment, the first donor-CU configures or reconfigures the second information for the DU of the mobile node according to the first information of the mobile node; and transmits the second information to the DU of the mobile node. Therefore, the first donor-CU can dynamically configure information in the mobility region for the mobile node according to real-time location information of the mobile node, which therefore may avoid conflict between the mobile node and adjacent cells, so that the network may support a plurality of mobile nodes to work simultaneously.

### Embodiments of Second Aspect

The embodiments of the present application provide an IAB integration method, which can be combined with the embodiments of the first aspect, or can be implemented separately, and the same content as the embodiments of the first aspect will not be repeated.

FIG. 12 is a schematic diagram of an IAB integration method in the embodiments of the present application. As shown in FIG. 12, the method includes:
1201: an MT of a mobile node establishes RRC connection with a second donor-CU;
1202: a DU of the mobile node is configured by an OAM entity with an IP address of a first donor-CU;
1203: after the MT of the mobile node receives the RRC connection reconfiguration message transmitted by the second donor-CU, the DU of the mobile node initiates F1 connection setup with the first donor-CU by using the IP address allocated by the second donor-CU, wherein the RRC connection reconfiguration message includes an IP address and a BAP layer address allocated by the second donor-CU for the mobile node, and an F1 connection setup request message transmitted by the DU of the IAB carries the BAP layer address.

It is worth noting that FIG. 12 above only schematically illustrates the embodiments of the present application, but the present application is not limited to this. For example, the order of execution between operations can be adjusted appropriately, and some other operations can be added or reduced. Those skilled in the art may make appropriate variations in accordance with the above contents, and which is not limited to the disclosure of FIG. 12 above.

In some embodiments, the first donor-CU is the F1-terminating donor-CU of the mobile node, and the second donor-CU is the non-F1-terminating donor-CU of the mobile node.

In some embodiments, the first donor-CU is an F1-terminating donor-CU of a plurality of mobile nodes in a designated area, and when the plurality of mobile nodes move in the designated area, F1 connections of IAB-DUs of the plurality of mobile nodes are always terminated at the first donor-CU.

In some embodiments, the DU of the mobile node reports an IP address selected for use from IP addresses allocated by the second donor-CU to the first donor-CU via a gNB DU configuration update message.

In some embodiments, the first donor-CU determines the second donor-CU based on the IP address selected for use by the mobile node and transmits a transport migration management request message to the second donor-CU; and the first donor-CU receives a transport migration management response message transmitted by the second donor-CU.

The transport migration management request message includes downlink transport network layer (TNL) information and the BAP layer address of the mobile IAB node used by the second donor-CU for configuring layer 2 mapping for the donor-DU, and in this way the second donor-CU may identify which IAB node the transport migration management request message is targeted based on the BAP layer address.

The IAB integration process of the embodiments of the present application are further illustrated by signaling interaction.

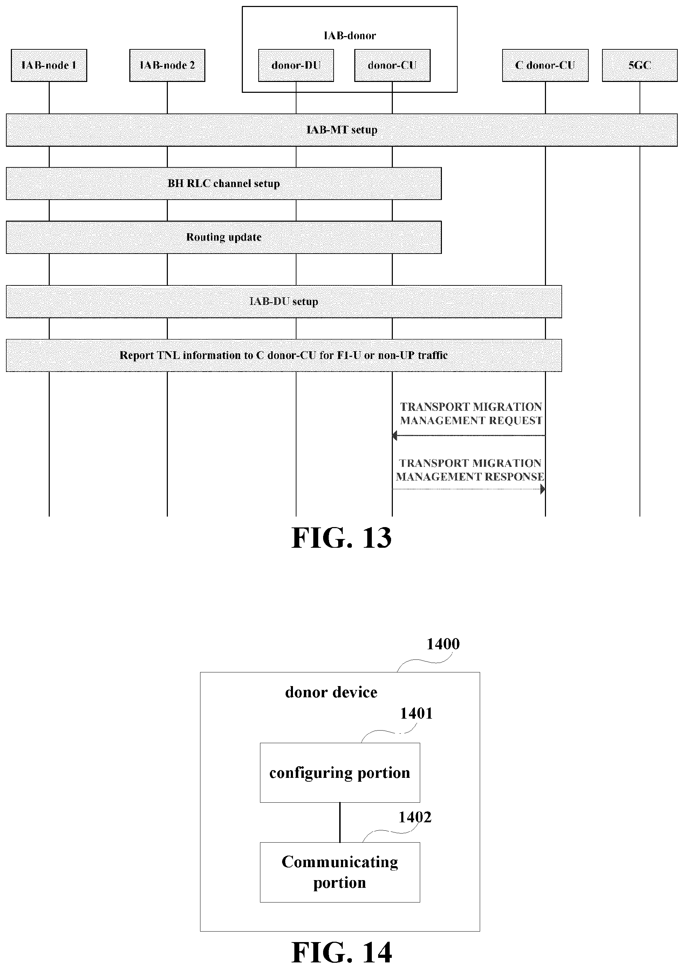

FIG. 13 is a signaling flow chart of IAB integration in the embodiments of the present application.

As shown in FIG. 13, during the setup phase of IAB-MT, IAB-MT is connected to the network like UE, to complete RRC connection setup to the donor-CU, IAB-MT context setup, core network authentication, radio bearer configuration for the IAB-MT, and PDU session setup related to OAM traffic. During RRC connection setup, IAB-MT may indicate the donor-CU that it has IAB node capability. The RRC connection reconfiguration message contains the IP address and the BAP layer address allocated by the donor-CU for the IAB node.

During the BH RLC channel setup phase, at least one default BH RLC channel for non-UP traffic is established, and a BAP address and a default uplink routing ID are configured for the IAB-node.

During the Routing update phase, the routing tables of upstream nodes of the IAB-node are updated and an IP address is allocated to the IAB-node.

During the setup phase of IAB-DU, the IAB-DU is configured with the IP address of the F1-terminating CU (i.e., C donor-CU) by OAM. The IAB-DU initiates F1 connection setup with the C donor-CU using the IP address allocated by the donor-CU. The F1 connection setup request carries the BAP layer address allocated by the donor-CU for the IAB node.

During the reporting of TNL information to the C donor-CU for F1-U or non-UP traffic, IAB-DU reports to the C donor-CU the actually used IP address selected from the IP addresses allocated by the C donor-CU (for example, via the gNB-DU CONFIGURATION UPDATE message), including the IP address used for F1-U or non-UP traffic.

As shown in FIG. 13, the C donor-CU determines the donor-CU accessed by IAB-MT based on the IP address information reported by IAB-DU, and transmits an IAB TRANSPORT MIGRATION MANAGEMENT REQUEST to the donor-CU, which contains the context of the non-UP traffic, including DL TNL information used by the donor-CU to configure downlink mapping for the donor-DU and the BAP layer address of the IAB node.

As shown in FIG. 13, the donor-CU determines that the IAB TRANSPORT MIGRATION MANAGEMENT REQUEST is targeted to the IAB node based on the BAP layer address, and transmits an IAB TRANSPORT MIGRATION MANAGEMENT RESPONSE message containing a DSCP/IPv6 flow label for transmitting downlink non-UP traffic to the C donor-CU.

The above signaling process only illustratively describes the embodiments of the present application, but the present application is not limited thereto, and more specific content of the signaling can be found by referring to the related art. In addition, for example, the order of execution between operations can be adjusted appropriately, and some other operations can be added or reduced. Those skilled in the art may make appropriate variations in accordance with the above contents, and which is not limited to the disclosure of FIG. 13 above.

The embodiments above only schematically illustrate the embodiments of the present application, but the present application is not limited to this, and appropriate variations can also be made on the basis of the above embodiments. For example, the above embodiments may be used separately, or one or more of the above embodiments may be combined.

As can be seen from the above embodiment, the IAB-DU does not necessarily establish an F1 connection with the initial access donor-CU of the IAB-MT, but establishes an F1 connection with the centralized controlled CU (i.e. the first donor-CU or C donor-CU). Therefore, the service stability of the mobile node may be further improved through the centralized controlled donor-CU.

### Embodiments of Third Aspect

The embodiments of the present application provide a donor device, and the same content as the embodiments in the first aspect will not be repeated. The device may, for example, be an IAB donor-CU in the IAB system (the first donor-CU as in the first and second aspects of embodiments), or may be a or some components or assemblies or modules configured in the IAB donor-CU.

FIG. 14 is a schematic diagram of a donor device in the embodiments of the present application. As shown in FIG. 14, the donor device 1400 includes:
a configuring portion 1401 configured to configure or reconfigure second information related to a first cell for the DU of the mobile node according to first information related to a position of the mobile node; and
a communicating portion 1402 configured to transmit the configured or reconfigured second information related to the first cell to the DU of the mobile node.

In some embodiments, the donor device is an F1-terminating donor centralized unit (donor-CU) of a plurality of mobile nodes in a designated area, and when the plurality of mobile nodes move in the designated area, F1 connections of DUs of the plurality of mobile nodes are always terminated at the donor device.

In some embodiments, the donor device transmits the configured or reconfigured second information related to the first cell to the DU of the mobile node via a first F1AP message.

In some embodiments, the first F1AP message includes an F1 setup response message or a gNB CU configuration update message.

In some embodiments, the second information includes at least one of the following: a physical cell identifier (PCI), an NR cell global identifier (NCGI), a tracking area code (TAC), or a physical random access channel (PRACH) resource configuration.

In some embodiments, before the configuring portion 1401 configures or reconfigures the second information related to the first cell for the DU of the mobile node, the communicating portion 1402 may also receive the currently configured second information of the first cell transmitted by the DU of the mobile node via a second F1AP message.

In some embodiments, the second F1AP message includes an F1 setup request message or a gNB DU configuration update message.

In some embodiments, before the configuring portion 1401 configures or reconfigures the second information related to the first cell for the DU of the mobile node, the communicating portion 1402 also receives second information of a third cell transmitted by a second donor-CU, wherein the second donor-CU is a non-F1-terminating donor-CU of the mobile node.

In some embodiments, the first information related to the position of the mobile node includes: position information of the mobile node or information on a cell accessed by the MT, and/or, second information related to a second cell detected and reported by the mobile termination (MT) served by the first cell.

In some embodiments, the communicating portion 1402 transmits second information related to the second cell or second information related to a third cell to the DU of the mobile node via a third F1AP message, so that the DU of the mobile node autonomously adjusts the configuration of PCI, PRACH, TAC, and NCGI.

In some embodiments, the non-F 1-terminating donor-CU of the mobile node changes from the second donor-CU to the third donor-CU; and the communicating portion 1402 receives the first information related to a position of the mobile node transmitted by the second donor-CU or the third donor-CU.

In some embodiments, a physical cell identifier (PCI) configured or reconfigured for the first cell does not conflict with the PCI of a neighboring cell, an NR cell global identifier (NCGI) configured or reconfigured for the first cell is associated with the NCGI of the neighboring cell, a tracking area code (TAC) configured or reconfigured for the first cell is identical to or associated with the TAC of the neighboring cell, and a physical random access channel (PRACH) resource configured or reconfigured for the first cell does not conflict with the PRACH resource of the neighboring cell.

In some embodiments, the communicating portion 1402 establishes an F1 connection with the DU of the mobile node,
wherein the MT of the mobile node establishes an RRC connection with the second donor-CU; the DU of the mobile node is configured by an OAM entity with an IP address of the first donor-CU; and after the MT of the mobile node receives the RRC connection reconfiguration message transmitted by the second donor-CU, the DU of the mobile node initiates the F1 connection setup with the donor device by using the IP address allocated by the second donor-CU; wherein the RRC connection reconfiguration message includes the IP address and the BAP layer address allocated by the second donor-CU for the mobile node, and the F1 connection setup request transmitted by the DU of the mobile node carries the BAP layer address.

In some embodiments, the communicating portion 1402 further receives an IP address selected for use from IP addresses allocated by the second donor -CU and reported by the DU of the mobile node via a gNB DU configuration update message.

In some embodiments, the communicating portion 1402 determines the second donor-CU according to the IP address selected for use by the mobile node, and transmits a transport migration management request message to the second donor-CU, wherein the transport migration management request message includes downlink transport network layer (TNL) information and the BAP layer address used by the second donor-CU for configuring layer 2 mapping for the donor-DU, and receives a transport migration management response message transmitted by the second donor-CU.

The embodiments above only schematically illustrate the embodiments of the present application, but the present application is not limited to this, and appropriate variations can also be made on the basis of the above embodiments. For example, the above embodiments may be used separately, or one or more of the above embodiments may be combined.

It is worth noting that only the components or modules related to the present application are illustrated hereinabove, but the present application is not limited to this. The donor device 1400 of the embodiments of the present application may also include other components or modules, and the details of these components or modules can be seen by referring to the related art.

In addition, for the sake of simplicity, FIG. 14 only exemplarily shows the connection relationship or signal trend between the individual components or modules, but it should be clear to those skilled in the art that various related techniques such as bus connections can be employed. The above individual components or modules can be implemented by hardware facilities such as a processor, a memory, a transmitter, a receiver, etc., which is not limited in the present application.

As can be seen from the above embodiment, the donor device configures or reconfigures the second information for the DU of the mobile node according to the first information of the mobile node; and transmits the second information to the DU of the mobile node. Therefore, the donor device may dynamically configure information in the mobile region for the mobile node according to real-time location information of the mobile node, which therefore may avoid conflict between the mobile node and adjacent cells, so that the network may support a plurality of mobile nodes to work simultaneously.

### Embodiments of Fourth Aspect

The embodiments of the present application provide a mobile node, and the same contents as the embodiments in the first and second aspects will not be repeated. The mobile node may, for example, be an IAB node in the IAB system (the mobile IAB node as in the first and second aspects of embodiments), or may be a or some components or assemblies or modules configured in the IAB node.

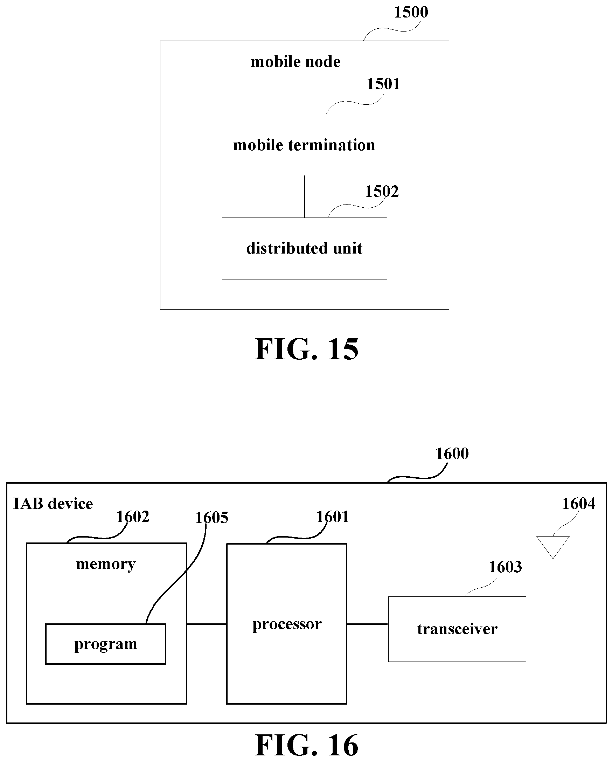

FIG. 15 is a schematic diagram of a mobile node in the embodiments of the present application. As shown in FIG. 15, the mobile node 1500 includes a mobile termination (MT) and a distributed unit (DU).

F1 connection of the distributed unit (DU) is terminated at a first donor centralized unit (donor-CU), and the DU of the mobile node receives second information related to a first cell transmitted by the first donor-CU, wherein the second information related to the first cell is configured or reconfigured by the first donor-CU according to the first information related to a position of the mobile node.

In some embodiments, the first donor-CU is an F1-terminating donor-CU of a plurality of mobile nodes in a designated area, and when the plurality of mobile nodes move in the designated area, F1 connections of DUs of the plurality of mobile nodes are always terminated at the first donor-CU.

In some embodiments, the second information includes at least one of the following: a physical cell identifier (PCI), an NR cell global identifier (NCGI), a tracking area code (TAC), or a physical random access channel (PRACH) resource configuration;
and the first information related to the position of the mobile node includes: position information of the mobile node or information on a cell accessed by the MT, and/or, second information related to a second cell detected and reported by the mobile termination (MT) served by the first cell.

In some embodiments, the MT of the mobile node establishes an RRC connection with the second donor-CU; the DU of the mobile node is configured by an OAM entity with an IP address of the first donor-CU; and after the MT of the mobile node receives the RRC connection reconfiguration message transmitted by the second donor-CU, the DU of the mobile node initiates the F1 connection setup with the first donor-CU by using the IP address allocated by the second donor-CU, wherein the RRC connection reconfiguration message includes the IP address and the BAP layer address allocated by the second donor-CU for the mobile node, and the F1 connection setup request transmitted by the DU of the mobile node carries the BAP layer address.

In some embodiments, the DU of the mobile node reports an IP address selected for use from the IP addresses allocated by the second donor-CU to the first donor-CU via a gNB DU configuration update message, and the IP address selected for use by the mobile node is used by the first donor-CU to determine the second donor-CU.

The embodiments above only schematically illustrate the embodiments of the present application, but the present application is not limited to this, and appropriate variations can also be made on the basis of the above embodiments. For example, the above embodiments may be used separately, or one or more of the above embodiments may be combined.

It is worth noting that only the components or modules related to the present application are illustrated hereinabove, but the present application is not limited to this. The mobile node 1500 of the embodiments of the present application may also include other components or modules, and the details of these components or modules can be seen by referring to the related art.

In addition, for the sake of simplicity, FIG. 15 only exemplarily shows the connection relationship or signal trend between the individual components or modules, but it should be clear to those skilled in the art that various related techniques such as bus connections can be employed. The above individual components or modules can be implemented by hardware facilities such as a processor, a memory, a transmitter, a receiver, etc., which is not limited in the present application.

As can be seen from the above embodiment, the donor device configures or reconfigures the second information for the DU of the mobile node according to the first information of the mobile node; and transmits the second information to the DU of the mobile node. Therefore, the donor device may dynamically configure information in the mobile region for the mobile node according to real-time location information of the mobile node, which therefore may avoid conflict between the mobile node and adjacent cells, so that the network may support a plurality of mobile nodes to work simultaneously.

### Embodiments of Fifth Aspect

The embodiments of the present application provide a communication system including a donor device and a mobile node (e.g., IAB-node); the network architecture and specific content of the donor device and the IAB node can be seen by referring to the related art, and the description thereof is omitted here.

In some embodiments, the IAB system includes a donor centralized unit and a mobile node, F1 connection of a distributed unit (DU) of the mobile node being terminated at the donor centralized unit,
wherein the donor centralized unit configures or reconfigures second information related to a first cell for the DU of the mobile node according to first information related to a position of the mobile node, and transmits the configured or reconfigured second information related to the first cell to the DU of the mobile node.

The embodiments of the present application further provide an IAB device, which may be an IAB donor device or an IAB node (migrating node or child node).

FIG. 16 is a schematic diagram of an IAB device in the embodiments of the present application. As shown in FIG. 16, the IAB device 1600 may include a processor (such as a central processing unit (CPU)) 1601 and a memory 1602; the memory 1602 is coupled to the processor 1601. The memory 1602 may store various data and also may store the information processing program 1605, and the program 1605 is executed under the control of the processor 1601.

For example, the processor 1601 may be configured to execute the program to implement the mobile node configuration method as described in the embodiments of the first aspect. For example, the processor 1610 may be configured to perform the following controls of: configuring or reconfiguring second information related to a first cell for the DU of the mobile node according to first information related to a position of the mobile node, and transmitting the configured or reconfigured second information related to the first cell to the DU of the mobile node.

For another example, the processor 1601 may be configured to execute the program to implement the IAB integration method as described in the embodiments of the second aspect. For example, the processor 1610 may be configured to perform the following controls: the MT of the mobile node establishes an RRC connection with the second donor-CU; the DU of the mobile node is configured by an OAM entity with an IP address of the first donor-CU; and after the MT of the mobile node receives the RRC connection reconfiguration message transmitted by the second donor-CU, the DU of the mobile node initiates the F1 connection setup with the first donor-CU by using the IP address allocated by the second donor-CU, wherein the RRC connection reconfiguration message includes the IP address and the BAP layer address allocated by the second donor-CU for the mobile node, and the F1 connection setup request transmitted by the DU of the mobile node carries the BAP layer address.

In addition, as shown in FIG. 16, the IAB device 1600 may further include: a transceiver 1603 and an antenna 1604, etc., wherein the functions of the above components are similar to the prior art, and will not be repeated here. It is worth noting that the IAB device 1600 is not necessarily required to include all of the components shown in FIG. 16; in addition, the IAB device 1600 may further include components not shown in FIG. 16, with reference to the prior art.

The embodiments of the present application further provide a computer readable program which, when being executed in the IAB device, causes the computer to execute, in the IAB device, the mobile node configuration method in the embodiments of the first aspect or the IAB integration method in the embodiments of the second aspect.

The embodiments of the present application further provide a storage medium storing a computer readable program which causes the computer to execute, in an IAB device, the mobile node configuration method in the embodiments of the first aspect or the IAB integration method in the embodiments of the second aspect.

The above devices and methods of the present application can be implemented by hardware or by hardware combined with software. The present application relates to a computer readable program which, when being executed by a logic unit, enables the logic unit to implement the devices or components mentioned above, or enables the logic unit to implement the methods or steps described above. The logic unit is, for example, a field programmable logic unit, a microprocessor, a processor used in the computer, etc. The present application also relates to storage medium for storing the above programs, such as a hard disk, a magnetic disk, a compact disc, a DVD, a flash memory, etc.

The method/device described in conjunction with the embodiments of the present application may be directly embodied as hardware, a software module executed by the processor, or a combination of both. For example, one or more of the functional block diagrams and/or combination thereof shown in the drawing may correspond to both software modules and hardware modules of the computer program flow. These software modules can correspond to the steps shown in the drawings respectively. These hardware modules can be realized, for example, by solidifying these software modules using field programmable gate arrays (FPGA).

The software module may reside in an RAM memory, a flash memory, an ROM memory, an EPROM memory, an EEPROM memory, a register, a hard disk, a removable disk, a CD-ROM, or a storage medium in any other form known in the art. A storage medium can be coupled to a processor so that the processor can read information from the storage medium and write information to the storage medium; or the storage medium can be a constituent part of the processor. The processor and the storage medium can be located in the ASIC. The software module can be stored in the memory of the mobile termination or in a memory card that can be inserted into the mobile termination. For example, if a device (such as a mobile termination) uses a large-capacity MEGA-SIM card or a large-capacity flash memory device, the software module can be stored in the MEGA-SIM card or the large-capacity flash memory device.

One or more of the functional blocks and/or combination thereof shown in the drawing may be implemented as a general-purpose processor, a digital signal processor (DSP), an application-specific integrated circuit (ASIC), a field programmable gate array (FPGA) or other programmable logic device, a discrete gate or a transistor logic device, a discrete hardware component, or any appropriate combination thereof, for performing the functions described in the present application. One or more of the functional blocks and/or combination thereof shown in the drawing may also be implemented as combination of computing devices, such as combination of DSP and a microprocessor, multiple microprocessors, one or more microprocessors combined with DSP communication, or any other such configuration.

The present application is described in combination with specific embodiments hereinabove, but a person skilled in the art should know clearly that the description is exemplary, but not limitation to the protection scope of the present application. A person skilled in the art can make various variations and modifications to the present application according to spirit and principle of the application, and these variations and modifications should also be within the scope of the present application.

With respect to the above-mentioned embodiments disclosed in the embodiment, the following supplements are further disclosed:
1. A mobile node configuration method, in which F1 connection of a distributed unit (DU) of the mobile node is terminated at a first donor-CU, the method including:
   the first donor-CU configures or reconfigures second information related to a first cell for DU of the mobile node according to first information related to a position of the mobile node; and
   the first donor-CU transmits the configured or reconfigured second information related to the first cell to the DU of the mobile node.
2. The method according to the supplement 1, wherein the first donor-CU is an F1-terminating donor-CU of a plurality of mobile nodes in a designated area, and when the plurality of mobile nodes move in the designated area, F1 connections of IAB-DUs of the plurality of mobile nodes are always terminated at the first donor-CU.
3. The method according to the supplement 1 or 2, wherein the first donor-CU transmits the configured or reconfigured second information related to the first cell to the DU of the mobile node via a first F1AP message.
4. The method according to the supplement 3, wherein the first F1AP message includes an F1 setup response message or a gNB CU configuration update message.
5. The method according to any of the supplements 1 to 4, wherein the second information includes at least one of the following: a physical cell identifier (PCI), an NR cell global identifier (NCGI), a tracking area code (TAC), or a physical random access channel (PRACH) resource configuration.
6. The method according to any of the supplements 1 to 5, wherein, before the first donor-CU configures or reconfigures the second information related to the first cell for the DU of the mobile node, the method further includes:
   the first donor-CU receives the currently configured second information of the first cell transmitted by the DU of the mobile node via a second F1AP message.
7. The method according to the supplement 6, wherein the second F1AP message includes an F1 setup request message or a gNB DU configuration update message.
8. The method according to any of the supplements 1 to 5, wherein, before the first donor-CU configures or reconfigures the second information related to the first cell for the DU of the mobile node, the method further includes:
   the first donor-CU receives second information of a third cell transmitted by a second donor-CU, wherein the second donor-CU is a non-F1-terminating donor-CU of the mobile node.
9. The method according to any of the supplements 1 to 8, wherein the first information related to the position of the mobile node includes: position information of the mobile node or information on a cell accessed by the MT, and/or, second information related to a second cell detected and reported by the mobile termination (MT) served by the first cell.
10. The method according to the supplement 9, wherein the method further includes:
   the first donor-CU transmits second information related to the second cell or second information related to a third cell to the DU of the mobile node via a third F1AP message.
11. The method according to any of the supplements 1 to 10, wherein a non-F1-terminating donor-CU of the mobile node changes from the second donor-CU to the third donor-CU;
   the method further includes:
   the first donor-CU receives the first information related to a position of the mobile node transmitted by the second donor-CU or the third donor-CU.
12. The method according to the supplement 11, wherein a physical cell identifier (PCI) configured or reconfigured for the first cell does not conflict with the PCI of a neighboring cell, an NR cell global identifier (NCGI) configured or reconfigured for the first cell is associated with the NCGI of the neighboring cell, a tracking area code (TAC) configured or reconfigured for the first cell is identical to or associated with the TAC of the neighboring cell, and a physical random access channel (PRACH) resource configured or reconfigured for the first cell does not conflict with the PRACH resource of the neighboring cell.
13. The method according to any of the supplements 1 to 12, wherein the method further includes:
   the first donor-CU establishes an F1 connection with the DU of the mobile node,
   wherein the MT of the mobile node establishes an RRC connection with the second donor-CU; the DU of the mobile node is configured by an OAM entity with an IP address of the first donor-CU; and after the MT of the mobile node receives the RRC connection reconfiguration message transmitted by the second donor-CU, the DU of the mobile node initiates the F1 connection setup with the first donor-CU by using the IP address allocated by the second donor-CU, wherein the RRC connection reconfiguration message includes the IP address and the BAP layer address allocated by the second donor-CU for the mobile node, and the F1 connection setup request transmitted by the DU of the mobile node carries the BAP layer address.
14. The method according to the supplement 13, wherein the method further includes:
   the first donor-CU further receives an IP address selected for use from IP addresses allocated by the second donor -CU and reported by the DU of the mobile node via a gNB DU configuration update message.
15. The method according to the supplement 14, wherein the method further includes:
   the first donor-CU determines the second donor-CU based on the IP address selected for use by the mobile node and transmits a transport migration management request message to the second donor-CU, wherein the transport migration management request message includes downlink transport network layer (TNL) information and the BAP layer address used by the second donor-CU for configuring layer 2 mapping for the donor-DU, and
   the first donor-CU receives a transport migration management response message transmitted by the second donor-CU.
16. A mobile node configuration method, in which F1 connection of a distributed unit (DU) of the mobile node is terminated at a first donor-CU, the method including:
   the DU of the mobile node receives second information related to a first cell transmitted by the first donor-CU,
   wherein the second information related to the first cell is configured or reconfigured by the first donor-CU according to the first information related to a position of the mobile node.
17. The method according to the supplement 16, wherein the first donor-CU is an F1-terminating donor-CU of a plurality of mobile nodes in a designated area, and when the plurality of mobile nodes move in the designated area, F1 connections of DUs of the plurality of mobile nodes are always terminated at the first donor-CU.
18. The method according to the supplement 16 or 17, wherein the DU of the mobile node receives the configured or reconfigured second information related to the first cell via a first F1AP message.
19. The method according to the supplement 18, wherein the first F1AP message includes an F1 setup response message or a gNB CU configuration update message.
20. The method according to any of the supplements 16 to 19, wherein the second information includes at least one of the following: a physical cell identifier (PCI), an NR cell global identifier (NCGI), a tracking area code (TAC), or a physical random access channel (PRACH) resource configuration.
21. The method according to any of the supplements 16 to 20, wherein, before the first donor-CU configures or reconfigures the second information related to the first cell for the DU of the mobile node, the method further includes:
   the DU of the mobile node transmits the currently configured second information of the first cell to the first donor-CU via a second F1AP message.
22. The method according to the supplement 21, wherein the second F1AP message includes an F1 setup request message or a gNB DU configuration update message.
23. The method according to any of the supplements 16 to 22, wherein the first information related to the position of the mobile node includes: position information of the mobile node or information on a cell accessed by the MT, and/or, second information related to a second cell detected and reported by the mobile termination (MT) served by the first cell.
24. The method according to the supplement 23, wherein the method further includes:
   the DU of the mobile node receives the second information related to the second cell or second information related to a third cell transmitted by the first donor-CU via a third F1AP message.
25. The method according to any of the supplements 16 to 24, wherein a non-F1-terminating donor-CU of the mobile node changes from the second donor-CU to the third donor-CU.
26. The method according to the supplement 25, wherein a physical cell identifier (PCI) configured or reconfigured for the first cell does not conflict with the PCI of a neighboring cell, an NR cell global identifier (NCGI) configured or reconfigured for the first cell is associated with the NCGI of the neighboring cell, a tracking area code (TAC) configured or reconfigured for the first cell is identical to or associated with the TAC of the neighboring cell, and a physical random access channel (PRACH) resource configured or reconfigured for the first cell does not conflict with the PRACH resource of the neighboring cell.
27. The method according to any of the supplements 16 to 26, wherein the method further includes:
   the MT of the mobile node establishes RRC connection with the second donor-CU;
   the DU of the mobile node is configured by an OAM entity with an IP address of the first donor-CU; and
   after the MT of the mobile node receives the RRC connection reconfiguration message transmitted by the second donor-CU, the DU of the mobile node initiates F1 connection setup with the first donor-CU by using the IP address allocated by the second donor-CU; wherein the RRC connection reconfiguration message includes the IP address allocated by the second donor-CU for the mobile node.
28. The method according to the supplement 27, wherein the method further includes:
   the DU of the mobile node reports an IP address selected for use from IP addresses allocated by the second donor-CU to the first donor-CU via a gNB DU configuration update message.
29. The method according to the supplement 28, wherein the IP address selected for use by the mobile node is used by the first donor-CU to determine the second donor-CU.
30. An IAB integration method, including:
   an MT of a mobile node establishes RRC connection with a second donor-CU;
   a DU of the mobile node is configured by an OAM entity with an IP address of a first donor-CU; and
   after the MT of the mobile node receives the RRC connection reconfiguration message transmitted by the second donor-CU, the DU of the mobile node initiates F1 connection setup with the first donor-CU by using the IP address allocated by the second donor-CU; wherein the RRC connection reconfiguration message includes the IP address and BAP layer address allocated by the second donor-CU for the mobile node, and an F1 connection setup request transmitted by the DU of the mobile node carries the BAP layer address.
31. The method according to the supplement 30, wherein the method further includes:
   the DU of the mobile node reports an IP address selected for use from IP addresses allocated by the second donor-CU to the first donor-CU via a gNB DU configuration update message.
32. An IAB integration method, including:
   a second donor-CU establishes RRC connection with an MT of a mobile node,
   wherein a DU of the mobile node is configured by an OAM entity with an IP address of a first donor-CU; and after the MT of the mobile node receives an RRC connection reconfiguration message transmitted by the second donor-CU, the DU of the mobile node initiates F1 connection setup with the first donor-CU by using an IP address allocated by the second donor-CU, wherein the RRC connection reconfiguration message includes the IP address and the BAP layer address allocated by the second donor-CU for the mobile node, and the F1 connection setup request transmitted by the DU of the mobile node carries the BAP layer address.
33. The method according to the supplement 32, wherein the method further includes:
   the second donor-CU receives a transport migration management request message transmitted by the first donor-CU, wherein the first donor-CU determines the second donor-CU based on the IP address selected for use by the mobile node, the transport migration management request message including downlink transport network layer (TNL) information and the BAP layer address used by the second donor-CU for configuring layer 2 mapping for the donor-DU; and
   the second donor-CU transmits a transport migration management response message to the first donor-CU.
34. The method according to the supplement 32, wherein the method further includes:
   the second donor-CU transmits second information of a third cell to the first donor-CU, wherein the second donor-CU is a non-F1-terminating donor-CU of the mobile node.
35. An IAB node including a memory storing a computer program and a processor configured to execute the computer program to implement the mobile node configuration method according to any of the supplements 16 to 29 or the IAB integration method according to the supplement 30 or 31.
36. An IAB donor device including a memory storing a computer program and a processor configured to execute the computer program to implement the mobile node configuration method according to any of the supplements 1 to 15 or the IAB integration method according to any of the supplements 32 to 34.

## Claims

1. A donor device, wherein an F1 connection of a distributed unit of a mobile node is terminated at the donor device, and the donor device comprises:
a configuring portion configured to configure or reconfigure second information related to a first cell for the distributed unit of the mobile node according to first information related to a position of the mobile node; and
a communicating portion configured to transmit the configured or reconfigured second information related to the first cell to the distributed unit of the mobile node.

2. The donor device according to claim 1, wherein,
the donor device is an F1-terminating donor centralized unit of a plurality of mobile nodes in a designated area, and when the plurality of mobile nodes move in the designated area, F1 connections of distributed units of the plurality of mobile nodes are always terminated at the donor device.

3. The device according to claim 1, wherein,
the donor device transmits the configured or reconfigured second information related to the first cell to the distributed unit of the mobile node via a first F1AP message.

4. The device according to claim 3, wherein,
the first F1AP message comprises an F1 setup response message or a gNB CU configuration update message.

5. The device according to claim 1, wherein,
the second information comprises at least one of the following: a physical cell identifier, an NR cell global identifier, a tracking area code, or physical random access channel resource configuration.

6. The device according to claim 1, wherein,
before the configuring portion configures or reconfigures the second information related to the first cell for the distributed unit of the mobile node, the communicating portion receives currently configured second information of the first cell transmitted by the distributed unit of the mobile node via a second F1AP message, or receives second information of a third cell transmitted by a second donor centralized unit, the second donor centralized unit being a non-F1-terminating donor centralized unit of the mobile node.

7. The device according to claim 6, wherein,
the second F1AP message comprises an F1 setup request message or a gNB DU configuration update message.

8. The device according to claim 1, wherein,
and the first information related to the position of the mobile node comprises: position information of the mobile node or information on a cell accessed by the mobile termination, and/or, second information related to a second cell detected and reported by the mobile termination served by the first cell.

9. The device according to claim 8, wherein,
the communicating portion transmits the second information related to the second cell or second information related to a third cell to the distributed unit of the mobile node via a third F1AP message.

10. The device according to claim 1, wherein a non-F1-terminating donor centralized unit of the mobile node is changed from a second donor centralized unit to a third donor centralized unit;
and the communicating portion receives the first information related to the position of the mobile node transmitted by the second donor centralized unit or the third donor centralized unit.

11. The device according to claim 10, wherein,
a physical cell identifier configured or reconfigured for the first cell does not conflict with a physical cell identifier of a neighboring cell, an NR cell global identifier configured or reconfigured for the first cell is associated with an NR cell global identifier of a neighboring cell, a tracking area code configured or reconfigured for the first cell is identical to or associated with a tracking area code of a neighboring cell, and a physical random access channel resource configured or reconfigured for the first cell does not conflict with a physical random access channel resource of a neighboring cell.

12. The device according to claim 1, wherein,
the communicating portion and the distributed unit of the mobile node establish an F1 connection,
wherein a mobile termination of the mobile node establishes a radio resource control connection with a second IAB donor-CU, the distributed unit of the mobile node is configured with an IP address of a first donor centralized unit by an OAM entity, and after the mobile termination of the mobile node receives a radio resource control connection reconfiguration message transmitted by the second donor centralized unit, the distributed unit of the mobile node initiates F1 connection setup with the donor device by using the IP address allocated by the second donor centralized unit, wherein the radio resource control connection reconfiguration message comprises an IP address and a BAP layer address allocated by the second donor centralized unit for the mobile node, and an F1 connection setup request transmitted by the distributed unit of the mobile node carries the BAP layer address.

13. The device according to claim 12, wherein,
the communicating portion further receives an IP address selected for use from IP addresses allocated by the second donor centralized unit and reported by the distributed unit of the mobile node via a gNB DU configuration update message.

14. The device according to claim 13, wherein,
the communicating portion determines the second donor centralized unit according to the IP address selected for use by the mobile node, and transmits a transport migration management request message to the second donor centralized unit, wherein the transport migration management request message comprises downlink transport network layer information and the BAP layer address used by the second donor centralized unit for configuring layer 2 mapping for a donor-distributed unit (donor-DU), and receive a transport migration management response message transmitted by the second donor centralized unit.

15. A mobile node, comprising a mobile termination and a distributed unit, an F1 connection of the distributed unit being terminated at a first donor centralized unit, and the distributed unit of the mobile node receiving second information related to a first cell transmitted by the first donor centralized unit,
wherein the second information related to the first cell is configured or reconfigured by the first donor centralized unit according to first information related to a position of the mobile node.

16. The mobile node according to claim 15, wherein the first donor centralized unit is an F1-terminating donor centralized unit of a pluarity of mobile nodes in a designated area, and when the pluarity of mobile nodes move in the designated area, F1 connections of distributed units of the pluarity of mobile nodes are always terminated at the first donor centralized unit.

17. The mobile node according to claim 15, wherein the second information comprises at least one of the following: a physical cell identifier, an NR cell global identifier, a tracking area code, or a physical random access channel resource configuration;
and the first information related to the position of the mobile node comprises: position information of the mobile node or information on a cell accessed by the mobile termination, and/or, second information related to a second cell detected and reported by the mobile termination served by the first cell.

18. The mobile node according to claim 15, wherein,
the mobile termination of the mobile node establishes a radio resource control connection with a second IAB donor-CU;
the distributed unit of the mobile node is configured by an OAM entity with an IP address of the first donor centralized unit;
and after the mobile termination of the mobile node receives the radio resource control connection reconfiguration message transmitted by the second donor centralized unit, the distributed unit of the mobile node initiates F1 connection setup with the first donor centralized unit by using the IP address allocated by the second donor centralized unit, wherein the radio resource control connection reconfiguration message comprises an IP address and a BAP layer address allocated by the second donor centralized unit for the mobile node, and an F1 connection setup request transmitted by the distributed unit of the mobile node carries the BAP layer address.

19. The mobile node according to claim 15, wherein,
the distributed unit of the mobile node reports an IP address selected for use from the IP addresses allocated by the second donor centralized unit to the first donor centralized unit via a gNB DU configuration update message, the IP address selected for use by the mobile node being used by the first donor centralized unit to determine the second donor centralized unit.

20. An integrated access and backhaul IAB system, comprising a donor centralized unit and a mobile node, an F1 connection of a distributed unit of the mobile node being terminated at the donor centralized unit,
wherein the donor centralized unit configures or reconfigures second information related to a first cell for the distributed unit of the mobile node according to first information related to a position of the mobile node, and transmits the configured or reconfigured second information related to the first cell to the distributed unit of the mobile node.
